Europäisches Patentamt

European Patent Office

Office européen des brevets

(11) Publication number: **0 253 599 B1**

# EUROPEAN PATENT SPECIFICATION

(45) Date of publication of patent specification: **14.08.91**   (51) Int. Cl.⁵: **B62D 65/00, B60R 13/06, B60J 5/00**

(21) Application number: **87306158.4**

(22) Date of filing: **13.07.87**

(54) Installing weather stripping in a door or like opening.

(30) Priority: **18.07.86 US 888238**
**22.12.86 US 944649**

(43) Date of publication of application:
**20.01.88 Bulletin 88/03**

(45) Publication of the grant of the patent:
**14.08.91 Bulletin 91/33**

(84) Designated Contracting States:
**DE FR GB**

(56) References cited:
**EP-A- 0 110 156**
**DE-A- 2 707 332**
**FR-A- 2 286 029**
**FR-A- 2 557 825**

(73) Proprietor: **GENERAL MOTORS CORPORA-TION**
**General Motors Building 3044 West Grand Boulevard**
**Detroit Michigan 48202(US)**

(72) Inventor: **St Angelo, Stephen, Jr.**
**2695 Powderhorn Ridge**
**Rochester Hills Michigan 48063(US)**
Inventor: **Carver, George Charles**
**1206 Stuart Avenue**
**Albany Georgia 31707(US)**
Inventor: **Patterson, David W.**
**4999 Old Ivy Road**
**Duluth Georgia 30136(US)**
Inventor: **Fremont Owen Kenneth**
**543 Marquette**
**Rochester Michigan 48063(US)**

(74) Representative: **Denton, Michael John et al**
**Patent Section Vauxhall Motors Limited 1st Floor Gideon House 26 Chapel Street**
**Luton Bedfordshire LU1 2SE(GB)**

## Description

This invention relates to the installation of weather stripping in a door or like opening, using including an end of arm tooling device for a robot used for installing a loop of weather stripping into a body opening as specified in the preamble of claim 1, for example as disclosed in FR-A-2 557 825.

It is well-known in the art to utilise weather stripping formed of an elastomeric material to seal openings in vehicles, such as door openings or trunk (boot) openings. The weather stripping used to seal the openings includes a generally U-shaped cross-sectional portion with interior barbs called the carrier, and also a tubular portion transversely joined to the carrier.

For installation of the weather stripping, the carrier of the weather stripping is press-fitted over the sheet metal flange of the periphery of the vehicle opening, with the tubular portion facing outwardly. The barbs of the carrier grab (engage) the sheet metal flange of the vehicle opening to retain the weather stripping in place. Over a period of time, the heat and exposure of the environment will cause the weather stripping to dry and shrink. The weather stripping is accordingly selected to be oversized at installation, and is usually selected to be 2% greater in length than the peripheral length of the door opening, to compensate for anticipated future shrinkage.

Manual installation of the weather stripping includes the steps of manually placing a fixed-length closed loop of weather stripping in the door opening, and pounding the weather stripping in place with the use of a rubber mallet. Since the installer selectively strikes only certain segments of the weather stripping with the mallet, the application of the weather stripping can sometimes be somewhat uneven. Also, excessive pounding can damage the weather stripping. Sometimes the weather stripping is then pushed down in a second operation with a manually-held roller, in an attempt to smooth out the weather stripping.

DE-A-27 07 332 discloses a manual tool for applying a profiled sealing frame 10 around the peripheral edge of a window pane of a motor vehicle. This manual tool comprises an elongated lever 3 provided with a hand grip 2 at one end and a z-shaped expansion member 4 at the other end which is inserted between sealing lips of a groove 11 of the sealing frame 10 in order to spread these lips apart to accomodate the edge of the window pane. A pressure roller 6 is rotatably mounted on lever 3 and is moved along the base of a groove 12 of the sealing frame in order to push the sealing frame 10 into position upon the window pane.

Since the length of the loop of weather stripping exceeds the linear length of the door opening, the weather stripping must be longitudinally compressed in certain areas of the door opening. It is more advantageous to place the longitudinally compressed portion of the weather stripping in the corner or curved sections of the door opening, since this helps to prevent the weather stripping from pulling away from the corner sections. However, since the weather stripping is pounded on to the flange, the longitudinally compressed portions of the weather stripping are in practice located on both the straight and curved sections of the door opening in a random manner.

The present invention is concerned with the provision of an improved apparatus and method suitable for the application of precut weather stripping, especially closed-loop weather stripping, to a body opening, primarily of a passenger car (automobile) or other vehicle, and to overcome the above-noted and other problems.

To this end an end of arm tooling device in accordance with the present invention comprises the combination of features specified in claim 1.

Also, a method of utilising such an end of arm tooling device on a robot to instal fixed lengths of weather stripping into a body opening comprises the method steps specified in any one of claims 5 to 9.

The present invention thereby makes it possible for fixed lengths of weather stripping to be applied to a body opening of a passenger car or the like without damage to the flange of the body opening, and with a more even application of the weather stripping to the flange being obtainable by the use of a pressure roller of the end of arm tooling device of the present invention.

The end of arm tooling device and the method of using it on a robot can readily be utilised to provide compression of the weather stripping in the corner sections of the opening, by selective speeding-up of the pressure roller at the corner sections of the body opening, which approach provides more satisfactory application, particularly when the fixed lengths of weather stripping used are 1 to 2% longer than the door openings to which they are to be fitted, as is desirable to ease application of the lengths of weather stripping.

The invention preferably utilises the fixed lengths of weather stripping in the form of fixed-length loops, so avoiding the need for cutting and re-joining cut ends of weather stripping, a procedure which has been found to be difficult and unsatisfactory in practice.

By means of the present invention, therefore, a robot fitted with the end of arm tooling device of the present invention can load the weather stripping from a loading station, transfer the weather stripping to the body opening, and then with a pressure roller instal the weather stripping within a body door or like opening.

By the use of the method of the present invention, it is possible to instal oversized weather stripping in an opening in a manner which places a greater proportion of the oversize in the corner sections of the opening than in the straight sections of the opening.

The end of arm tooling device may have a selectively operable gripper thereon to grab the weather stripping from the loading station to load the arm.

The end of arm tooling device has a guide roller rotatably mounted thereon which has a first position of engagement with the weather stripping to align the weather stripping, and a second position out of engagement with the weather stripping. The end of arm tooling device also includes an idler roller supporting the weather stripping generally opposite the guide roller in the first position of the guide roller, and preferably has a powered pressure roller having variable rotational velocity and compliance with respect to the device in two axes, with the pressure roller receiving weather stripping from the guide roller and guiding the weather stripping and tracing the opening of the body, whereby the weather stripping is affixed to the body opening.

In a preferred procedure in accordance with the present invention, utilising a robot with an end of arm tooling device having a variable rotational velocity motor-powered pressure roller, including a clutch to selectively engage the pressure roller with the motor or disengage it therefrom, one to three per cent oversized fixed lengths of weather stripping, stored in a loading station, are each installed into a respective body opening including generally straight sections and corner sections cumulatively linearly shorter than the fixed length of the weather stripping, the end of arm tooling device being loaded with one of the fixed lengths, the fixed length being transferred from the loading station to the body opening, and the pressure roller being interacted and traced along a straight section at a first linear speed, with the clutch disengaging the pressure roller from the motor and thereby allowing the pressure roller to free-wheel at a first rotational speed, and the pressure roller being interacted and traced along a corner section at a second linear speed slower than the first linear speed, with the clutch engaging the pressure roller with the motor for powering the pressure roller at a second rotational speed greater than the first rotational speed, whereby the fixed length of weather stripping is guided and affixed with the sections as the fixed length is installed into the body opening, and whereby the portion of the fixed length of weather stripping exceeding the linear length of the opening is installed in a linearly compressed manner at the corner sections.

In the drawings:

Figure 1 is a perspective view of a robot having an end of arm tooling device in accordance with the present invention in a factory environment;

Figures 2, 3 and 4 are fragmentary perspective views of an end of arm tooling device of a robot in accordance with the present invention loading weather stripping from a loading station;

Figure 5 is a fragmentary perspective view illustrating the robot installing weather stripping within a vehicle door opening, during the initial stages of installation;

Figure 6 is a fragmentary perspective view illustrating the robot installing the weather stripping within the vehicle door opening, towards the end of the installation; and

Figure 7 is an enlarged view of the area circled in Figure I.

With reference now to Figure I, a six-axis robot IO is shown located adjacent the side of a vehicle body II. The vehicle II is moved along on a conveyor line or by an automatic guided vehicle I3. A weather stripping loading station is provided by a carousel or conveyor line I4 adjacent the robot IO. The conveyor line I4 carries a series of presentation fixtures or hangers I5 on each of which are stored two separate fixed-length closed loops of weather stripping I6 (only one loop per hanger being shown, for clarity of illustration).

As will be described later, the robot IO will load the weather stripping I6 from the conveyor line I4 and then transfer the weather stripping to the vehicle II, whereupon the robot IO will instal the weather stripping I6 by interacting with a vehicle door opening I8 to affix the weather stripping I6 therein.

The robot IO is supported on a pedestal 22 and has an arm 24 movable in both the horizontal and vertical planes for universal movement. Mounted to the end of the arm 24 of the robot by means of a wrist 28 is an end of arm tooling device 40 which allows the robot IO to pick up the weather stripping I6 and affix the same to the door opening I8.

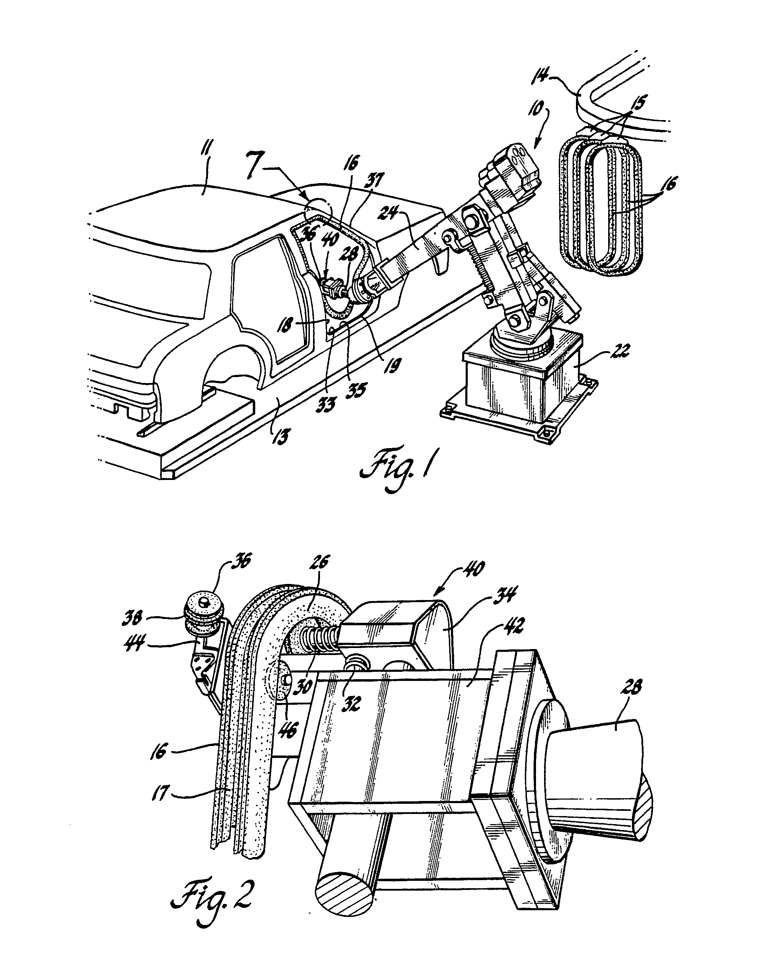

With reference to Figures 2, 3 and 4, the end of arm tooling device 40 has a frame 42 that has rotatably mounted thereon a pressure roller 26. The pressure roller 26 provides the means to guide and seat the weather stripping I6 to affix the weather stripping I6 to the vehicle door opening I8. The pressure roller is powered for rotation, and is provided with compliance in two perpendicular axes with respect to the robot arm 24 by springs 30 and 32. The compliance is provided to allow for variations in the location of the vehicle II, the location of the door opening I8, and the location of a flange I9 (Figures I, 5 and 6) of the door opening.

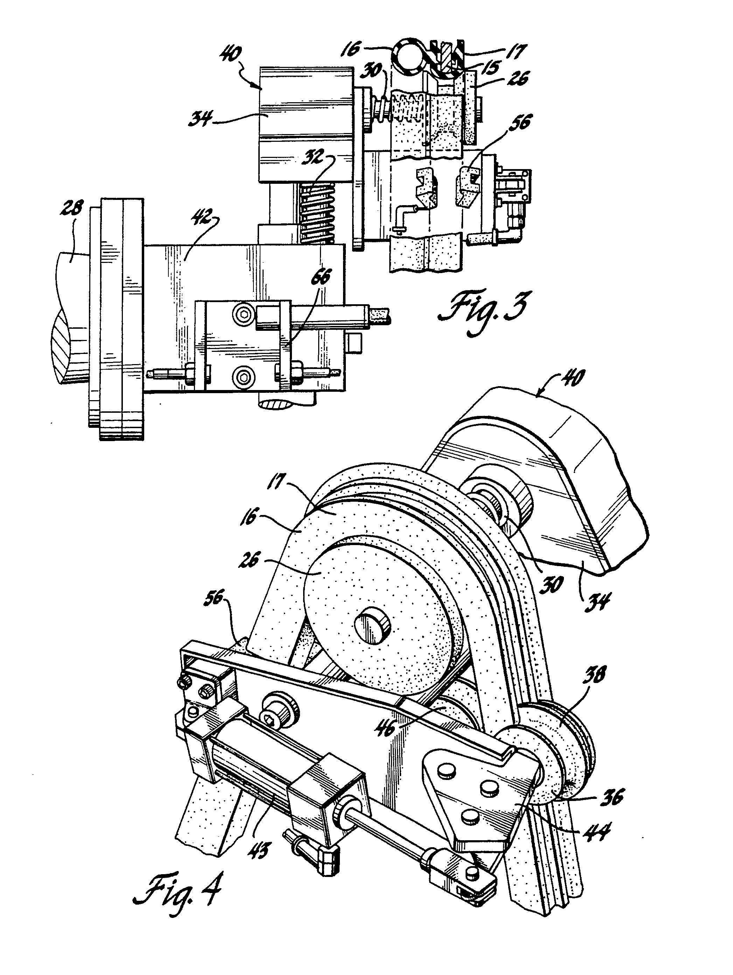

Also, the pressure roller 26 has a clutch 34 providing it with a variable rotational velocity. The variable rotational velocity allows the robot l0, via the pressure roller 26, to trace the vehicle door opening l8 at a faster rate along the straight sections such as section 35 (Figure 5) and at a slower rate along the corners or curves such as section 33 (Figure 5).

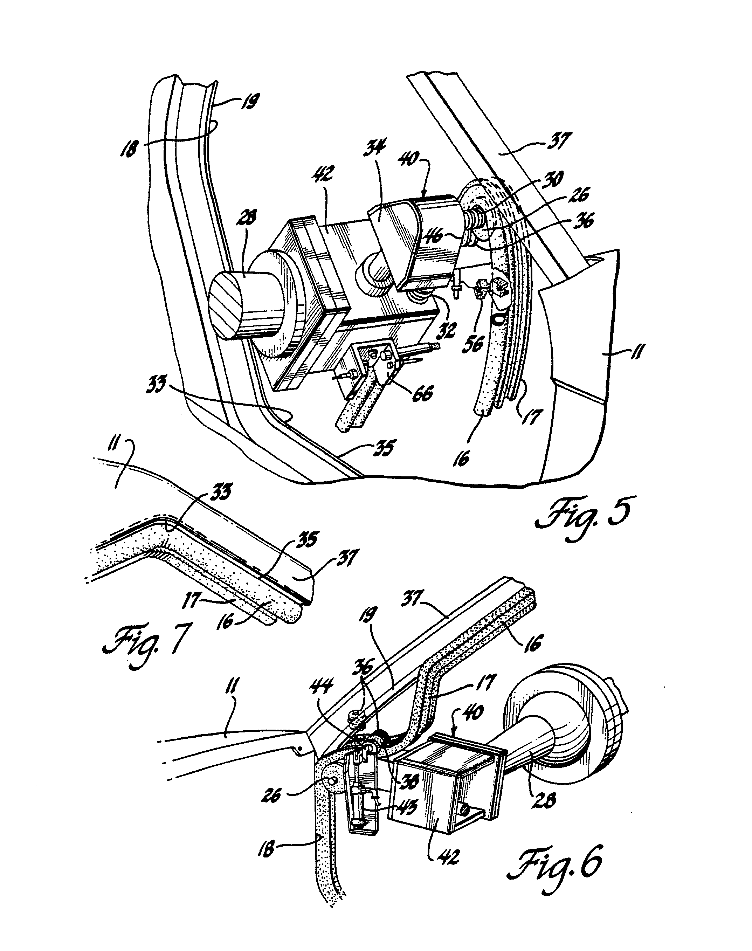

To align the weather stripping l6 with the pressure roller 26 there is provided a guide roller 36. The guide roller 36 is also rotatably mounted to the end of arm tooling device frame 42. The guide roller 36 has a first position wherein a centre blade 38 of the guide roller is engaged with the weather stripping l6 at a location opposite the pressure roller 26. The end of arm tooling device 40 has an air cylinder 43 and a pivotally connected lever 44 (Figure 4) to translate the guide roller 36 to a second position out of engagement with the weather stripping l6 (shown in Figures 2 and 6 in phantom). This second position is provided to allow loading of the weather stripping l6 to the robot l0 or release of the weather stripping l6 (shown in Figure 6 in phantom) during the final stages of installation.

Located on the opposite side of the weather stripping l6 from the guide roller 36 is an idler roller 46 which is rotatably mounted to the end of arm tooling device frame 42. The function of the idler roller 46 is to co-operate with the guide roller 36 in effecting alignment of the weather stripping l6 with the pressure roller 26.

The end of arm tooling device 40 has a means to load the arm 24 with weather stripping l6 from the conveyor l4 provided by a selectively operable gripper 56. The gripper 56 allows the robot l0 to grab the weather stripping l6 from the conveyor l4 and transfer the weather stripping l6 to the door opening l8.

In operation, the hangers l5 are loaded with weather stripping l6 manually or by a machine, by placing the U-shaped portion l7 of the weather stripping (commonly referred to as the carrier) on to the hanger. The robot l0 positions the end of arm tooling device 40 in the proximity of the conveyor line l4. A sensor, not shown, located on the conveyor line l4 determines whether a ring of weather stripping l6 is present on the hanger l5, and signals the location of the weather stripping l6 to the robot's controller. After receiving the signal of the presence and location of the weather stripping l6, the robot l0 then moves the pressure roller 26 vertically upwardly to contact the weather stripping l6 (as seen in Figure 3, in which portions of the hanger l5 are deleted for clarity of illustration), with the carrier l7 of the weather stripping l6 facing away from the robot wrist 28.

The end of arm tooling device is then rotated via the wrist 28 to allow the gripper 56 to grab (grasp) the weather stripping l6. The end of arm tooling device 40 is then rotated in the opposite direction (as seen in Figure 2, in which the hanger l5 has been omitted for clarity of illustration) to bring the idler roller 46 into contact with the weather stripping l6. The air cylinder 43 then activates the lever 44 (as seen in Figure 4, in which the hanger l5 has been omitted for clarity of illustration), so translating the guide roller 36 to a position of engagement with the weather stripping l6. The robot l0 then moves the end of arm tooling device 40 away from the hanger l5, thereby completing the loading of the arm 24.

If desired, the sequence of operation of the grippers 56 grabbing (grasping) the weather stripping l6 and the guide roller 36 moving from its second to its first position can be reversed in the loading of the weather stripping l6 to the arm 24.

The robot l0 then transfers the weather stripping l6 towards the door opening l8 (as seen in Figure 5). The robot l0 first positions the end of arm tooling device 40 in such a position that a sensor 66 mounted on the end of arm tooling device can confirm the location of the opening l8. The gripper 56 will also then be actuated, to release the weather stripping l6.

Installation may start anywhere; however, it is preferable to start on an A pillar 37 of the door opening l8 and then proceed in an upward direction. The robot l0, via the arm 24 and the wrist 28, will then cause the pressure roller 26 to trace the inner periphery of the door opening l8 along the flange l9, and in doing so to guide and affix the carrier l7 of the weather stripping to the flange l9 of the door opening l8. The robot l0 may be programmed to move at a faster pace along the straight sections 35 and at a slower pace round the corner 33, to ensure even installation of the weather stripping l6.

As mentioned previously, the rotational speed of the pressure roller 26 will be varied to provide for the changes in linear installation speed. The rotational speed of the pressure roller 26 can be modified by selectively engaging the pressure roller 26 with, or disengaging it from, a motor 39 powering the pressure roller. In the installation of oversized fixed lengths, it has been found to be advantageous to allow the pressure roller 26 to free-wheel along the straight sections 35. Therefore the rotational speed of the pressure roller 26 will largely be a function of the linear speed of the robot l0 (via the end of arm tooling device 40). As the end of arm tooling device 40 approaches the corner 33, the linear speed of the end of arm tooling device slows down. The clutch 34 then engages the pressure roller 26 with its powered motor 39, and the pressure roller 26 attains a rotational speed that is even greater than its rotational speed along the straight section 35. The combination of the slower linear speed of the end of arm tooling device 40 and the higher rotational speed of the pressure roller 26 causes the weather stripping I6 to be selectively applied and affixed to the corner section 33 (as seen in Figure 7) in a linearly compressed manner. Therefore the slack in the weather stripping I6 is taken up where it is needed most, namely in the corner sections 33.

After the pressure roller 26 has left the corner, the clutch 34 again disengages, and the pressure roller 26 again free-wheels along the next straight section 35. The linear speed of the end of arm tooling device 40 will thereby return to its higher speed level.

It has been found that longitudinal compression of a length of weather stripping I6 is a function of the relative velocity of a point on the periphery of the pressure roller 26 relative to a point on the door opening I8. The longitudinal compression of the weather stripper I8 is therefore also a function of the rotational velocity of the pressure roller 26. Generally, an increase in the rotational velocity of the pressure roller 26 causes an increase in the longitudinal compression of the weather stripping I6.

As the installation nears completion (as seen in Figure 6), the guide roller 36 will be translated to its second position (shown in phantom in Figure 6) to prevent it from pulling away the already installed weather stripping I6. The installation can then be completed as the pressure roller 24 moves up the A pillar 37.

The robot I0 will then return to the conveyor I4 to be reloaded, and the next opening or vehicle will be brought into place.

The present invention makes available a method for utilising a robot I0 with an arm 24 having a pressure roller 26 to instal a loop of weather stripping I6 stored in a loading station (conveyor) I4 to an opening I8 in a vehicle body, the method including the following steps:

I. Loading the robot arm 24 with a loop of weather stripping I6;

2. Transferring the weather stripping I6 from the loading station I4 to the opening I8 in the vehicle body; and

3. Interacting the pressure roller with the opening I8 in the vehicle body whereby the weather stripping I6 is guided and affixed with the opening I8 in the vehicle body.

The present invention also makes available a method of loading an arm 24 of a robot I0 with a loop of weather stripping I6 from a loading station I4 wherein the robot has an end of arm tooling device 40 with a pressure roller 26 and a guide roller 36 having a first position of engagement with the weather stripping and a second position out of engagement therewith, and a selectively operable gripper 56 to grab (grasp) the weather stripping I6, the method including the following steps:

I. Engaging the weather stripping I6 with the pressure roller 26; and

2. Closing the gripper 56 to grab the weather stripping I6, and translating the guide roller 36 from the second to the first position whereby the weather stripping is loaded to the robot arm 24.

The present invention further makes available a method for utilising a robot I0 with an arm 24 having a variable rotational velocity powered pressure roller 26 to instal oversized fixed lengths of weather stripping I6, stored in a loading station (conveyor) I4, to a body opening I8 including generally straight sections 35 and corner sections 33 cumulatively linearly shorter than the fixed length of the weather stripping, the method including the following steps:

I. Loading the robot arm 24 with one of the fixed lengths I6;

2. Transferring the fixed length I6 from the loading station I4 to the body opening I8; and

3. Interacting and tracing the pressure roller 26 along a straight section 35 at a first linear speed and at a first rotational speed, and interacting and tracing the pressure roller 26 along a corner section 33 at a second linear speed lower than the first linear speed and at a second rotational speed greater than the first rotational speed, whereby the fixed length I6 is guided and affixed to the sections 33, 35 as the fixed length is installed into the body opening I8, and whereby the portion of the fixed length of weather stripping I6 exceeding the linear length of the body opening I8 is installed in a linearly (or longitudinally) compressed manner at the corner section 33.

The present invention is advantageous in that it allows the use of weather stripping with a carrier having a narrower opening, whereby the weather stripping will adhere to the flange of the vehicle body opening better. Narrow carrier openings make manual installation more difficult, and have therefore been avoided in the past.

The weather stripping I6 also has added a small piece of metal reinforcement in the end-to-end joint of the closed-loop fixed length.

It has further been found that the weather stripping I6 works better when fabricated from a slightly more rigid elastomeric material than that normally used in manual application, with a durometer rating held between 65 and 70 instead of the range of between 60 and 70 allowed in manual application.

Even with all the above-noted modifications, however, the weather stripping I6 used in robotic applications can still be used in manual installation systems.

The present invention has been described in relation to (automotive) vehicle body openings; however, the various applications of the present invention extend beyond automotive vehicle bodies specifically.

## Claims

1.  An end of arm tooling device for a robot (10) used for installing a loop of weather stripping (16) on a flange (19) of a body opening (18) in a motor vehicle (11), the end of arm tooling device (40) comprising in combination: a frame (42) and a means to guide and seat said weather stripping (16) in place on said flange (19) of said opening (18), whereby the weather stripping (16) is affixed in position around the opening (18) of the body (11), characterised in that said means to guide and seat the weather stripping (16) comprises a pressure roller (26) rotatably mounted on the frame (42) which acts on the weather stripping (16) and traces the periphery of the opening (18) of the body (11); a guide roller (36) which is rotatably mounted to the frame (42) and has a first position in which it is engageable with the opposite side of the weather stripping (16) to the pressure roller (26), and a second position in which it is out of engagement with the loop of weather stripping (16); a means (43,44) for translating the guide roller (36) between the two positions; and an idler roller (46) rotatably mounted on the frame (42) at a location generally opposite the guide roller (36) in the first position of the guide roller (36), and co-operating with the guide roller to align the weather stripping (16).

2.  An end of arm tooling device according to claim 1, characterised in that the pressure roller (26) is powered with a variable rotational velocity for receiving the loop of weather stripping (16) from the guide roller (36) and guiding the loop of weather stripping (16).

3.  An end of arm tooling device according to claim 1 or 2, characterised in that the loop of weather stripping (16) is stored in a loading station (14), and the end of arm tooling device includes a selectively operable gripper (56) mounted to the frame (42) to grab the loop of weather stripping (16) from the loading station (14) to load the robot (10).

4.  An end of arm tooling device according to claim 3, characterised in that the loop of weather stripping (16) is a closed loop.

5.  A method of utilising a robot (10) having an arm (24) provided with an end of arm tooling device (40) according to claim 1, to install a fixed length of weather stripping (16) into a body opening (18) of a motor vehicle (11), characterised in that the method comprises: loading the robot arm (24) with the fixed length of weather stripping (16); moving the guide roller from said second position to said first position so as to align the weather stripping (16) with the pressure roller (26); transferring said fixed length of weather stripping (16) to said opening (18); and then pressing the weather stripping (16) into position upon a flange (19) around said body opening (18) with said pressure roller (26) by rotating said pressure roller (26) in contact with said weather stripping (16) along the complete perimeter of the opening (18) of the body (11) so that the fixed length of weather stripping (16) is guided and affixed to the flange (19) around the perimeter of the opening (18) of the body (11).

6.  A method of utilising a robot (10) having an arm (24) provided with an end of arm tooling device (40) according to claim 2, to install a fixed length of weather stripping (16) into a body opening (18), the perimeter of which includes straight sections (35) and corner sections (33), characterised in that said method comprises loading the robot arm (24) with the fixed length of weather stripping (16); moving the guide roller from said second position to said first position so as to align the weather stripping (16) with the pressure roller (26); transferring said fixed length of weather stripping (16) to said opening (18); rolling said pressure roller (26) in contact with said weather stripping (16) along the straight sections (35) of the perimeter of the opening (18) at a first linear speed and a first rotational speed, and rolling said pressure roller (26) in contact with said weather stripping (16) along each corner section (33) at a second linear speed differing from the first linear speed and at a second rotational speed differing from the first rotational speed, so that the fixed length of weather stripping (16) is guided and affixed with said sections (33,35) as the fixed length of weather stripping (16) is installed around the body opening (18), and the relative velocity of a point on the periphery of the pressure roller (26) relative to a point in the door opening (18) in the corner section (33) is such that said weather stripping (16) is longitudinally compressed in said corner section (33).

7.  A method according to claim 6, characterised in that the pressure roller (26) is powered by a motor (39), the fixed length of weather stripping (16) is oversized, the generally straight sections (35) and corner sections (33) of the perimeter of the body opening (18) are cumulatively linearly shorter than the fixed length of weather stripping (16), and the method includes distributing the portion of the fixed length of weather stripping (16) exceeding the linear length of the perimeter of the body opening (18) in a linearly compressed manner at the corner sections (33).

8. A method according to claim 7, characterised in that a clutch (34) is operable to selectively engage the pressure roller (26) with the motor (39) or disengage it therefrom, the fixed length of weather stripping (16) is one to three per cent oversized, and the method includes disengaging the pressure roller (26) from the motor (39) during the movement of the pressure roller (26) along said straight sections (35) at said first linear speed, using the clutch (34), thereby allowing the pressure roller (26) to free-wheel at a first rotational speed; and engaging the pressure roller (26) with the motor (39), during the movement of the pressure roller (26) along said corner sections (33) at a second linear speed that is slower than said first linear speed, using the clutch (34), thereby powering the pressure roller (26) at a second rotational speed greater than the first rotational speed.

9. A method of utilising a robot (10) having an arm (24) provided with an end of arm tooling device (40) according to claim 3, to install a fixed length of weather stripping (16) into a body opening (18) of a motor vehicle (11), characterised in that the method comprises: contacting the loop of weather stripping (16) held in said loading station (14) with said pressure roller (26) of the device (40) whilst said guide roller (36) is in said second position; closing the gripper (56) to grab the loop of weather stripping (16); moving said guide roller (36) of the device (40) from the second to the first position so as to load the loop of weather stripping (16) onto the robot arm (24) in alignment with the pressure roller (26); transferring said fixed length of weather stripping (16) to said opening (18); and then pressing the weather stripping (16) into position upon a flange (19) around said body opening (18) with said pressure roller (26) by rotating said pressure roller (26) in contact with said weather stripping (16) along the complete perimeter of the opening (18) of the body (11) so that the fixed length of weather stripping (16) is guided and affixed to the flange (19) around the perimeter of the opening (18) of the body (11).

**Revendications**

1. Tête d'outillage pour un bras d'un robot (10), destinée à effectuer l'installation d'un anneau de joint (16) d'étanchéité sur un rebord (19) d'une ouverture (18) d'une carrosserie d'un véhicule automobile (11), la tête d'outillage pour un bras comportant une combinaison de: un cadre (42) et un dispositif destiné à guider et à mettre en place ledit joint (16) d'étanchéité sur ledit rebord (19) de ladite ouverture (18), fixant ainsi le joint (16) d'étanchéité en place sur le pourtour de l'ouverture (18) de la carrosserie (11), caractérisée par le fait que ledit dispositif destiné à guider et à mettre en place ledit joint (16) d'étanchéité comprend un rouleau applicateur (26) tournant dans le cadre (42), qui agit sur le joint (16) d'étanchéité et longe la périphérie de l'ouverture (18) de la carrosserie (11); un galet (36) de guidage, qui tourne dans le cadre (42) et peut occuper une première position dans laquelle il peut s'engager dans la face du joint (16) d'étanchéité qui est opposée au rouleau applicateur (26), et une deuxième position dans laquelle il est dégagé de l'anneau de joint (16) d'étanchéité; un dispositif (43, 44) destiné à entaîner le galet (36) de guidage d'une position à l'autre; et un galet (46) de maintien, qui tourne dans le cadre (42) et est généralement situé à l'opposé du galet (36) de guidage, lorsque celui-ci occupe la première position, et qui coopère avec le galet (36) de guidage de façon à aligner le joint (16) d'étanchéité.

2. Tête d'outillage pour un bras selon la revendication 1, caractérisée par le fait que le rouleau applicateur (26) est entrainé à une vitesse de rotation variable, afin de recevoir l'anneau de joint (16) d'étanchéité par le galet (36) de guidage, et de guider cet anneau de joint (16) d'étanchéité.

3. Tête d'outillage pour un bras selon l'une des revendications 1 ou 2, caractérisée par le fait que l'anneau de joint (16) d'étanchéité est entreposé dans une station (14) de chargement, et que la tête d'outillage pour un bras comporte une pince (56), pouvant être commandée de façon sélective, montée sur le cadre (42) et destinée à saisir l'anneau de joint (16) d'étanchéité à la station (14) de chargement, de façon à charger le robot (10).

4. Tête d'outillage pour un bras selon la revendication 3, caractérisée par le fait que l'anneau de joint (16) d'étanchéité est un anneau fermé.

5.  Procédé d'utilisation d'un robot (10) comprenant un bras (24) muni d'une tête d'outillage (40) pour un bras correspondant à la revendication 1, destinée à installer un joint (16) d'étanchéité d'une longueur définie dans une ouverture (18) de la carrosserie d'une automobile (11), caractérisé par le fait que le procédé comporte: le chargement du bras (24) avec un joint (16) d'étanchéité d'une longueur définie; le déplacement du galet de guidage de ladite deuxième position vers ladite première position, afin d'aligner le joint (16) d'étanchéité sur le rouleau applicateur (16); le transfert dudit joint (16) d'étanchéité de longueur définie vers ladite ouverture (18); et la mise en place par compression du joint (16) d'étanchéité sur un rebord (19) au pourtour de ladite ouverture (18) de la carrosserie à l'aide dudit rouleau applicateur (26), en faisant rouler ledit rouleau applicateur (26), en contact avec ledit joint (16) d'étanchéité, le long de tout le périmètre de l'ouverture (18) de la carrosserie (11), de telle sorte que le joint (16) d'étanchéité de longueur définie soit guidé et fixé sur le rebord (19) le long du périmètre de l'ouverture (18) de la carrosserie (11).

6.  Procédé d'utilisation d'un robot (10) comprenant un bras (24) muni d'une tête d'outillage (40) pour un bras correspondant à la revendication 2, destinée à installer un joint (16) d'étanchéité d'une longueur définie dans une ouverture (18) d'une carrosserie, le périmètre de cette ouverture comprenant des parties droites (35) et des angles (33), caractérisé par le fait que ledit procédé comporte le chargement du bras (24) avec un joint (16) d'étanchéité d'une longueur définie; le déplacement du galet de guidage de ladite deuxième position vers ladite première position, afin d'aligner le joint (16) d'étanchéité sur le rouleau applicateur (26); le transfert dudit joint (16) d'étanchéité de longueur définie vers ladite ouverture (18); l'entraînement en rotation dudit rouleau applicateur (26), en contact avec ledit joint (16) d'étanchéité, le long des parties droites (35) du périmètre de l'ouverture (18), à une première vitesse linéaire et une première vitesse de rotation, et l'entraînement en rotation dudit rouleau applicateur (26), en contact avec ledit joint (16) d'étanchéité, le long des angles (33), à une deuxième vitesse linéaire différente de la première vitesse linéaire et à une deuxième vitesse de rotation différente de la première vitesse de rotation, de telle façon que le joint (16) d'étanchéité de longueur définie soit guidé et fixé le long desdites parties (33, 35) au fur et à mesure que ce joint (16) d'étanchéité de longueur définie est installé sur le pourtour de l'ouverture (18) de la carrosserie, et que la vitesse relative entre un point sur la périphérie du rouleau applicateur (26) et un point de l'ouverture (18) de porte, situé dans l'angle (33), soit telle que ledit joint (16) d'étanchéité est comprimé longitudinalement dans l'angle (33).

7.  Procédé selon la revendication 6, caractérisé par le fait que ledit rouleau applicateur (26) est entrainé par un moteur (39), que le joint (16) d'étanchéité de longueur définie est réalisé avec une surlongueur, que la longueur développée cumulée des parties (35) généralement droites et des angles (33) du périmètre de l'ouverture (18) de la carrosserie est inférieure à la longueur définie du joint (16) d'étanchéité, et que le procédé comporte la disposition de la partie du joint (16) d'étanchéité de longueur définie, qui excède la longueur développée du périmètre de l'ouverture (18) de la carrosserie, de façon linéairement comprimée dans les angles (33).

8.  Procédé selon la revendication 7, caractérisé par le fait qu'un embrayage (34) peut être commandé de manière à relier sélectivement le rouleau applicateur (26) au moteur (39), ou à le débrayer de ce dernier, que le joint (16) d'étanchéité de longueur définie est réalisé avec une surlongueur de 1 à 3 %, et que le procédé comporte le débrayage, à l'aide de l'embrayage (34), du rouleau applicateur (26) du moteur (39) pendant le déplacement dudit rouleau applicateur (26) le long desdites parties droites (35), à ladite première vitesse linéaire, permettant ainsi au rouleau applicateur (26) d'avancer en roue-libre à une première vitesse de rotation; et l'établissement, à l'aide de l'embrayage (34), d'une liaison entre le rouleau applicateur (26) et le moteur (39), pendant le passage du rouleau applicateur (26) le long de l'angle (33), à une deuxième vitesse linéaire qui est inférieure à ladite première vitesse linéaire, entraînant ainsi le rouleau applicateur (26) à une deuxième vitesse de rotation qui est supérieure à la première vitesse de rotation.

9.  Procédé d'utilisation d'un robot (10) comprenant un bras (24) muni d'une tête d'outillage (40) pour un bras correspondant à la revendication 3, destinée à installer un joint (16) d'étanchéité d'une longueur définie dans une ouverture (18) de la carrosserie d'une automobile (11), caractérisé par le fait que le procédé comporte: l'entrée en contact avec l'anneau de joint (16) d'étanchéité maintenu dans ladite station (14) de chargement, effectuée par ledit rouleau applicateur (26) du dispositif (40) pendant que ledit galet (36) de guidage occupe ladite deuxième position; la fermeture de la pince (56) de façon à saisir l'anneau de joint (16) d'étanchéité; le déplacement dudit galet (36) de guidage du dispositif (40) depuis ladite deuxième position vers ladite première position, de manière à charger l'anneau de joint (16) d'étanchéité sur le bras (24) en l'alignant sur le rouleau (26); le transfert dudit joint (16) d'étanchéité de longueur définie vers ladite ouverture (18); et l'application par compression du joint (16) d'étanchéité en place sur le rebord (19) suivant le pourtour de ladite ouverture (18) de la carrosserie, à l'aide dudit rouleau applicateur (26), en faisant tourner ledit rouleau applicateur (26), en contact avec ledit joint (16) d'étanchéité, le long de tout le périmètre de l'ouverture (18) de la carrosserie (11), de telle sorte que le joint (16) d'étanchéité de longueur définie soit guidé et fixé le long du périmètre de l'ouverture (18) de la carrosserie (11).

**Patentansprüche**

1. Arm-Ende-Bestückungsgerät für einen Roboter (10), der zum Installieren einer Kederstreifen-Schleife (16) an einem Flansch (19) einer Karosserieöffnung (18) in einem Motorfahrzeug (11) benutzt wird, wobei das Arm-Ende-Bestückungsgerät (40) in Kombination umfaßt: einen Rahmen (42) und ein Mittel zum Führen und Auflegen des Kederstreifens (16) an seinem Ort an dem Flansch (19) der Öffnung (18), wodurch der Kederstreifen (16) in seiner Lage um die Öffnung (18) der Karosserie (11) befestigt wird, dadurch gekennzeichnet, daß das Mittel zum Führen und Auflegen des Kederstreifens (16) umfaßt eine drehbar an dem Rahmen (42) angebrachte Druckwalze (26), die auf den Kederstreifen (16) einwirkt und dem Umfang der Öffnung (18) der Karosserie (11) nachfährt; eine Führungswalze (36), die an dem Rahmen (42) drehbar angebracht ist und eine erste Lage besitzt, in der sie mit der der Druckwalze (26) gegenüberliegenden Seite des Kederstreifens (16) in Eingriff bringbar ist, und eine zweite Lage, in der sie sich außer Eingriff mit der Schleife des Kederstreifens (16) befindet; ein Mittel (43, 44) zum Verschieben der Führungswalze (36) zwischen den zwei Lagen; und eine an dem Rahmen (42) an einer der Führungswalze (36) in ihrer ersten Lage allgemein gegenüberliegenden Stelle drehbar angebrachte Mitlaufwalze (46), die mit der Führungswalze zum Ausrichten des Kederstreifens (16) zusammenwirkt.

2. Arm-Ende-Bestückungsgerät nach Anspruch 1, dadurch gekennzeichnet, daß die Druckwalze (26) mit einer variablen Drehgeschwindigkeit beaufschlagt ist zum Aufnehmen der Kederstreifen-Schleife (16) von der Führungswalze (36) und zum Führen der Kederstreifen-Schleife (16).

3. Arm-Ende-Bestückungsgerät nach Anspruch 1 oder 2, dadurch gekennzeichnet, daß die Kederstreifen-Schleife (16) in einer Ladestation (14) gespeichert ist und das Arm-Ende-Bestückungsgerät einen wahlweise betätigbaren, an dem Rahmen (42) angebrachten Greifer (56) enthält, um die Kederstreifen-Schleife (16) von der Ladestation (14) zu erfassen, um den Roboter (10) zu laden.

4. Arm-Ende-Bestückungsgerät nach Anspruch 3, dadurch gekennzeichnet, daß die Kederstreifen-Schleife (16) eine geschlossene Schleife ist.

5. Verfahren zur Verwendung eines Roboters (10) mit einem Arm (24), der mit einem Arm-Ende-Bestückungsgerät (40) nach Anspruch 1 versehen ist, zum Installieren einer festgelegten Kederstreifen-Länge (16) in eine Karosserieöffnung (18) eines Motorfahrzeugs (11), dadurch gekennzeichnet, daß bei dem Verfahren: der Roboterarm (24) mit der festgelegten Kederstreifen-Länge (16) beladen wird; die Führungswalze von der zweiten Lage in die ersten Lage bewegt wird, um so den Kederstreifen (16) mit der Druckwalze (26) auszurichten; die festgelegte Kederstreifen-Länge (16) zu der Öffnung (18) überführt wird; und dann der Kederstreifen (16) in seine Lage auf einem Flansch (19) um die Karosserieöffnung (18) mit der Druckwalze (26) angedrückt wird durch Drehen der Druckwalze (26) in Berührung mit dem Kederstreifen (16) längs des vollständigen Umfangs der Öffnung (18) der Karosserie (11), so daß die festgelegte Kederstreifen-Länge (16) an den Flansch (19) um den Umfang der Öffnung (18) der Karosserie (11) geführt und an ihm befestigt wird.

6. Verfahren zur Verwendung eines Roboters (10) mit einem Arm (24), der mit einem Arm-Ende-Bestückungsgerät (40) nach Anspruch 2 versehen ist, zum Installieren einer festgelegten Kederstreifen-Länge (16) in eine Karosserieöffnung (18), deren Umfang geradlinige Abschnitte (35) und Eckenabschnitte (33) enthält, dadurch gekennzeichnet, daß bei dem Verfahren der Roboterarm (24) mit der festgelegten Kederstreifen-Länge (16) beladen wird; die Führungswalze von der zweiten Lage in die erste Lage bewegt wird, um so den Kederstreifen (16) mit der Druckwalze (26) auszurichten; die festgelegte Kederstreifen-Länge (16) zu der Öffnung (18) überführt wird; die Druckwalze (26) in Berührung mit dem Kederstreifen (16) längs der geradlinigen Abschnitte (35) des Umfangs der Öffnung (18) mit einer ersten Lineargeschwindigkeit und einer ersten Drehgeschwindigkeit gerollt wird, und die Druckwalze (26) in Berührung mit dem Kederstreifen (16) längs jedes Eckenabschnitts (33) mit einer zweiten, von der ersten linearen Geschwindigkeit unterschiedlichen Lineargeschwindigkeit und einer zweiten, von der ersten Rotationsgeschwindigkeit unterschiedlichen Rotationsgeschwindigkeit gerollt wird, so daß die festgelegte Kederstreifen-Länge (16) geführt und an den Abschnitten (33, 35) befestigt wird, während die festgelegte Kederstreifen-Länge (16) um die Karosserieöffnung (18) installiert wird, und die Relativgeschwindigkeit einer Stelle an dem Umfang der Druckwalze (26) relativ zu einer Stelle in der Türöffnung (18) in dem Eckenabschnitt (33) so ist, daß der Kederstreifen (16) in dem Eckenabschnitt (33) in Längsrichtung komprimiert wird.

7. Verfahren nach Anspruch 6, dadurch gekennzeichnet, daß die Druckwalze (26) durch einen Motor (39) angetrieben wird, daß die festgelegte Kederstreifen-Länge (16) übergroß ist, so daß die allgemein geradlinigen Abschnitte (35) und die Eckenabschnitte (33) des Umfangs der Karosserieöffnung (18) zusammengenommen linear kürzer als die festgelegte Kederstreifen-Länge (16) sind und bei dem Verfahren der die lineare Länge des Umfangs der Karosserieöffnung (18) übersteigende Abschnitt der festgelegten Kederstreifen-Länge (16) komprimiert und an den Eckenabschnitten (33) verteilt wird.

8. Verfahren nach Anspruch 7, dadurch gekennzeichnet, daß eine Kupplung (34) betreibbar ist, wahlweise die Druckwalze (26) mit dem Motor (39) in Eingriff zu bringen oder davon zu lösen, daß die festgelegte Kederstreifen-Länge (16) 1 bis 3 % Übergröße aufweist und daß bei dem Verfahren die Druckwalze (26) während ihrer Bewegung längs der geradlinigen Abschnitte (35) mit der ersten Lineargeschwindigkeit unter Benutzung der Kupplung (34) von dem Motor gelöst wird, wodurch die Druckwalze (26) mit einer ersten Drehgeschwindigkeit frei laufen gelassen wird, und daß die Druckwalze (26) unter Benutzung der Kupplung mit dem Motor (39) während der Bewegung der Druckwalze (26) längs der Eckenabschnitte (33) mit einer zweiten Lineargeschwindigkeit in Eingriff gebracht wird, die langsamer als die erste Lineargeschwindigkeit ist, wodurch die Druckwalze (26) mit einer zweiten Rotationsgeschwindigkeit beaufschlagt wird, die größer als die erste Rotationsgeschwindigkeit ist.

9. Verfahren zur Benutzung eines Roboters (10) mit einem Arm (24), der mit einem Arm-Ende-Bestückungsgerät (40) nach Anspruch 3 versehen ist, zum Installieren einer festgelegten Kederstreifen-Länge (16) in einer Karosserieöffnung (18) eines Kraftfahrzeugs (11), dadurch gekennzeichnet, daß bei dem Verfahren: die in der Beladestation (14) gehaltene Kederstreifen-Schleife (16) mit der Druckwalze (26) des Geräts (40) in Berührung gebracht wird, während die Führungswalze (36) sich in der zweiten Lage befindet; der Greifer (56) geschlossen wird, um die Kederstreifen-Schleife (16) zu fassen; die Führungswalze (36) des Geräts (40) von der zweiten in die erste Lage bewegt wird, um so die Kederstreifen-Schleife (16) in Ausrichtung mit der Druckwalze (26) auf den Roboter-Arm (24) zu laden; die festgelegte Kederstreifen-Länge (16) zu der Öffnung (18) überführt wird und dann der Kederstreifen (16) mit der Druckwalze (26) in seine Lage auf einem Flansch (19) um die Karosserieöffnung (18) längs des vollständigen Umfangs der Öffnung (18) der Karosserie (11) gedrückt wird durch Drehen der Druckwalze (26) in Berührung mit dem Kederstreifen (16), so daß die festgelegte Kederstreifen-Länge (16) um den Umfang der Öffnung (18) der Karosserie (11) an den Flansch (19) geführt und an ihm befestigt wird.

Fig. 1

Fig. 2

*Fig. 3*

*Fig. 4*

EP 0 253 599 B1

Fig. 5

Fig. 7

Fig. 6

13